# EUROPEAN PATENT APPLICATION

(11) **EP 1 479 849 A1**
(43) Date of publication of application: **24.11.2004**
(21) Application number: 02795298.5
(22) Date of filing: 01.10.2002
(51) Int. Cl.: E04F 15/16

(54) **FLEXIBLE, ANTI-SKID FLOOR COMPRISING WOOD AND RUBBER**

(30) Priority: 03.01.2002 AR 0100020
(71) Applicant: Pursall, Javier Eduardo, 1642 San Isidro (AR); Fuks Mitelmann, Diego Javier, 08870 Sitges (ES)
(72) Inventor: Pursall, Javier Eduardo, 1642 San Isidro (AR); Fuks Mitelmann, Diego Javier, 08870 Sitges (ES)
(86) International application number: PCT/ES2002/000459
(87) International publication number: WO 2003/056114

(57) **Abstract**

The invention relates to a floor comprising square strips of rubber with small wooden squares glued thereeto and a sloot which is disposed between each piece of wood, thereby forming a tyle. In this way, said strips are postioned side by side in order to fom a floor. The slots between the wooden squares enable the sheet of rubber to bend and adapt to flat or somewhat curved surfaces. In addition, the rubber, which forms the base of the tyle, comprices anti-skid properties in relation to the floor o sub-floor to which it is applied. Moreover, the slots between the wood on the upper part of the tyle provide the tyle with anti-skid properties in relation to movement thereon. According to the invention, no additional materials are requerid to mount the tyle. In order to adjust the inventive tyle to projections in the sub-floor, wooden squares are remove by cutting the rubber using a sharp knife along the slots between the wood.

## Description

### BRIEF REVIEW

The invention relates to a floor,with a regular tyle shape,which enables to have it mounted on flat o curved sub-floors,not requiring glue or any auxiliary material for assembling purposes.

### GENERAL REVIEW OF THE PRESENT TECHNIQUE ON FLOORS.

At present,there are several types of floors,that can be assembled only in flat sub-floors,such as multilaminated in wood and plastic,in various lenght and shapes,boards,and floating floors ,this last one on top of a plastic soft sheet.-In any case,aditional elements and tools are required,as a complement for binding the floor to the sub-floor.-Some floors have dove tails for mounting,which requires close machining tolerances.-Besides,it is requerid a certain skill to have thenm assembled,because they must be adjusted, nailed,or fastened ,and wooden pegs inserted.

The invention solves the whole assebly process,by eliminating all aditional operations, including hand works and materials.-The sub-floor can be flat or somewhat curved.-It so happen because the tyles of the invention comprise a rubber base plate,to which several wooden squares are glued.-The wood squares do not touch each other.-The wood block become the walking pass.

### AIMS OF THE INVENTION

The aims of the invention,are achived by gluing on top of a rubber plate the size of a tyle,many small square wooden blocks,which are enough apart from each other,to live an space,or slot, between each two wood squares.- The slot allowes the rubber plate to remain flexible,acting like a hinge.

Because of the anti-skid property of the rubber of the tyle,which is laying on top of the sub-floor,the tyle is unable to skid.

Because of the slots between square wood blocks,the top of the tyle becomes a anti-skid surface to the transit.

No glue is required to assemble the tyles ,one next to the other,on the sub-floor.

When it is neccesary to adjust to projections coming out from the sub-floor,wood squares can be removed by cutting the rubber with a sharp knife.

### SOME EXPLANATION ON DRAWINGS

For a better undertanding of the invention,two drawings show how the invention is :

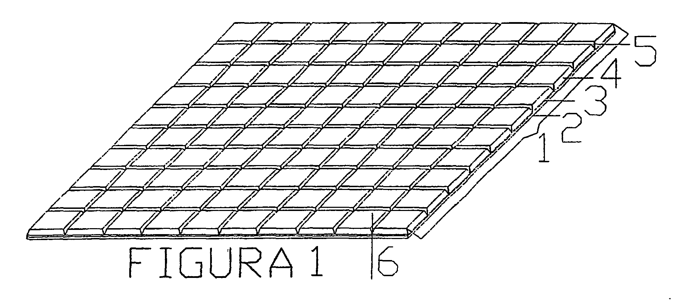

Drawing N° 1: Is a perspective view of the tyles,such as they are conforming a floor.

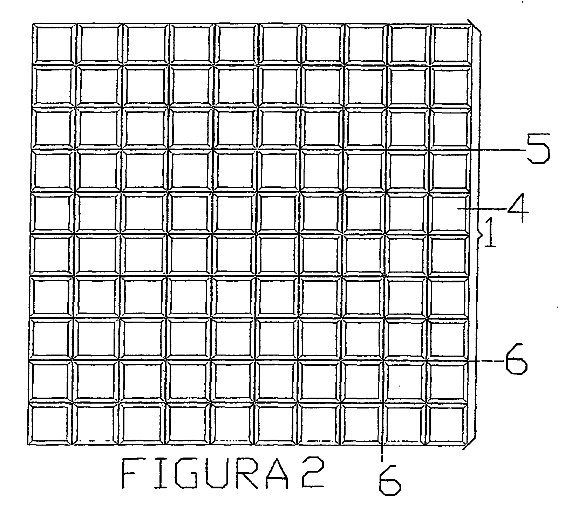

Drawing N° 2: Is a top view of one tyle of the floor.

In both drawings,same numbers belong to same parts.

The parts are as follows :

| Part number | Part description |
|---|---|
| 1 | tyle |
| 2 | rubber plate |
| 3 | glue |
| 4 | wood blocks |
| 5 | slots |
| 6 | dashed line which indicates a possible slots where to cut the rubber to remove wood blocks.- |

## Claims

1. The invention is a floor made out of tyles comprising a square rubber plate, having in its top side, small square wood blocks, glued to the rubber plate, separated by narrow slots, which remain surrounding all the wood blocks. The tyles, side by side on top the sub-floor, become a floor.

2. The wood and rubber floor has, as one of its main characteristic, that can be applied on flat and also curved sub-floors,because it is flexible. The slots alongside of the rubber, betwen wood squares, let the rubber to flex.

3. The wood and rubber floor has its anti-skid characteristic because the botom of the rubber plate, which is the side touching the sub-floor, has a gripping action on it, while the great amount of slots between wood squares, have a gripping action to walkers.

## Amended claims

### Amended claims under Art. 19.1 PCT

**1.** The invention is a composite floor made of wood and rubber, in which a solid wood panel is gflued to flexible rubber plate. After the glue is set,by using machinery, slots are made in the lenght and the width of the wooden panel. The depth of the slots goes from the top of the wood panel, to its bottom, living an empty space between the several square blocks which become after panel is slotted. The rubber is not slotted, and remains of the same original tickness.

**2.** The slots so made as per Claim N° 1, divide the wood plate in several small wooden blocks ,firmly glued to the rubber base plate. These wooden blocks can have various shapes : rectangular, rhomboidal,square,with curved forms.

**3.** The slots so made have a wedged shape. The wider side of the wedge is in the upper side of the slot. The end of the wedge, or apex, is at the glued face of the wood Mock. The apex of the slot is an arrow like,but has a certain width, which is the same of the visible rubber width. These visible rubber width acts as a hinge because there is an empty space between any two sides of the wooden blocks.-If the tyle so formed is to be folded to a roll form, it can be done in two opposite sences, that is with the wooden plates looking inside or outside the roll.

**4.** The roll so formed as per Claim N° 3, can be unfolded, and used to pave any surface, which could be flat or curved in a convex or concave shape,then continuing on a slopped surface, then on a vertical surface.-All these surfaces can be flat,convex or concave. In example, it could be applied over spherical surfaces if the size of the slots are encreased, and the size of the wooden blocks decreased, while been machined.

**5.** The rubber plate base of the tyles, has by its bottom side, a great amount of very thin and narrow rubber edges protruding from the rubber, against the sub-floor surface. The own weight of the tyle plus, the weight of any object lying on the top of the tyle, and the proper of the walkers, will compress the edges, and encrease the anti-skid property of the floor.

**6.** As there is a void in between wooden blocks, due to the machined slots, it forms a split surface, which is higly anti-skid. When used outdoor, the weather conditions, like rain, will not change its property.

**7.** The composite wood and rubber floor can be made tyle form, or rolls.-In any case, it can be removed after mounting,because does not require to be glued to the sub-floor.

**8.** If there are protruding elements in the sub-floor where the invention is to be mounted, with a sharp knife, wooden blocks can easily be removed, by cutting the rubber in the choosen slots. Nevertheless, de rubber will not rip afterwards.
